# EUROPÄISCHE PATENTANMELDUNG

(11) **EP 0 892 258 A1**
(43) Veröffentlichungstag der Anmeldung: **20.01.1999**
(21) Anmeldenummer: 97810485.9
(22) Anmeldetag: 15.07.1997
(51) Int. Cl.: G01L 5/00, G01L 5/16, G01L 5/20, G01L 1/22

(54) **Messanordnung für einen Radsatz eines Schienenfahrzeuges und Vorrichtung zum Anbringen einer derartigen Messanordnung an einem Radsatz**

(71) Anmelder: SLM Schweizerische Lokomotiv- und Maschinenfabrik AG, CH-8401 Winterthur (CH)
(72) Erfinder: Hecht, Markus, Dr., 12249 Berlin (DE); Cerqueira, José, 8406 Winterthur (CH)
(74) Vertreter: Trieblnig, Adolf

(57) **Zusammenfassung**

Die Messanordnung enthält mehrere, je an der Welle (2) des Radsatzes (1) an verschiedenen Messquerschnitten (I, II) anbringbare Messfühler (D1 - D4 bzw. D5 - D6), insbesondere Dehnungsmessstreifen, zum Erfassen der im Fahrbetrieb auftretenden Kräfte. Die Messfühler (D1 - D4 bzw. D5 - D6) sind innerhalb einer die Welle (2) zumindest teilweise durchsetzenden axialen Bohrung (7) an deren Wandung (18) befestigt. Diese Anordnung gestattet die Anbringung der Messfühler (D1 - D4 bzw. D5 - D8) in einem serienmässigen Radsatz ohne Beeinträchtigung der Festigkeit der Radsatzwelle (2). Die Vorrichtung zum Anbringen der Messanordnung enthält einen in die Bohrung (7) einführbaren Träger (12) mit einer Halterung (15) für mehrere radial verstellbare, je mit mindestens einem Messfühler (D1 bis D4 bzw. D5 bis D8) bestückbare Anpressteile (16) und einen den Träger durchsetzenden Verstellteil (12) mit einem Kupplungsteil (31), über den die Anpressteile (16) je zwischen einer ein Anpressen des Messfühlers (D1 bis D4 bzw. D5 bis D8) an die Wandung (8) der Bohrung (7) zulassenden Anpressstellung und einer im Abstand von der Wandung (18) einnehmbaren Ruhestellung verstellbar sind. Die Messfühler (D1 bis D4 bzw. D5 bis D8) sind jeweils in einer genau definierbaren Winkelstellung in einem beliebigen Längenabschnitt der Welle (2) positionierbar.

## Beschreibung

Die Erfindung betrifft eine Messanordnung für einen Radsatz eines Schienenfahrzeuges entsprechend dem Oberbegriff des Patentanspruchs 1 sowie eine Vorrichtung zum Anbringen einer derartigen Messanordnung an einem Radsatz.

Bei einer bekannten Messanordnung der genannten Art sind auf der Radsatzwelle an drei Messquerschnitten je acht Messfühler angebracht, wobei je zwei gegeneinander um 180° versetzte Messfühler einen Zweig einer Wheatstone-Messbrücke bilden (DE 3114499 A1). Die Messspannung an dieser Brücke ist ein Mass für die jeweils auftretende Zug- bzw. Druckspannung. Aus den gemessenen Zug- bzw. Druckspannungen lassen sich Horizontalkräfte bestimmen, die an den Radaufstandspunkten auf die Radscheiben einwirken. Im gleichen Dokument wird auch auf Messanordnungen zur Ermittlung der Biegemomente bzw. der vertikalen Kräfte an Rad und Schiene Bezug genommen. Bei bisherigen Messanordnungen der genannten Art sind die Messfühler, in der Regel Dehnungsmessstreifen, jeweils am Aussenumfang der Radsatzwelle angebracht, wobei die für die Uebertragung der Messsignale erforderlichen Verbindungsleitungen durch in der Radsatzwelle anzubringende radiale Bohrungen und eine oder mehrere axiale Bohrungen der Radsatzwelle einer Auswerteeinheit zugeführt werden. Durch die die Radsatzwelle schwächenden Bohrungen und/oder durch die Radscheibe schwächende Ausnehmungen zur Aufnahme von Messfühlern wird die Lebensdauer eines derartigen Messradsatzes wesentlich herabgesetzt.

Der Erfindung liegt die Aufgabe zugrunde, eine insbesondere in dieser Hinsicht weiterentwickelte Messanordnung der eingangs genannten Art zu schaffen, welche die Erfassung der im Fahrbetrieb auftretenden Horizontal- und Vertikalkräfte und/oder Momente ohne zusätzliche, die Festigkeit des Radsatzes beeinträchtigende Massnahmen ermöglicht.

Diese Aufgabe wird erfindungsgemäss mit den kennzeichnenden Merkmalen des Anspruchs 1 gelöst.

Die erfindungsgemässe Messanordnung gestattet die Anbringung der Messfühler in einem serienmässigen Radsatz, ohne irgend eine schädigende Veränderung der Radsatzwelle und in beliebigen, z.B. auch von Teilen der Antriebseinrichtung und/oder von den Rädern umgebenen, Längenabschnitten der Radsatzwelle.

Eine Vorrichtung zum Anbringen der erfindungsgemässen Messanordnung ist Gegenstand des Anspruchs 2. Ein mit einer erfindungsgemässen Messanordnung ausgestatteter Radsatz ist Gegenstand des Anspruchs 9. Ausgestaltungen des Erfindungsgegenstandes sind in den abhängigen Ansprüchen angegeben.

Weitere Einzelheiten und Merkmale ergeben sich aus der folgenden Beschreibung von in der Zeichnung schematisch dargestellten Ausführungsbeispielen nach der Erfindung, in Verbindung mit den Patentansprüchen. Es zeigen:
- Fig.1: einen mit an einer erfindungsgemässen Messanordnung versehenen Radsatz eines Schienenfahrzeugs in einem Längsschnitt,
- Fig.2: einen Teil der Messanordnung nach Fig.1 in einer isometrischen Darstellung,
- Fig.2a: eine Brückenschaltung von Messfühlern der Messanordnung nach Fig.1,
- Fig.2b: einen Teil einer anderen Messanordnung in einer isometrischen Darstellung, mit Messfühlern in einer Brückenschaltung entsprechend derjenigen nach Fig.2a,
- Fig.3: eine Vorrichtung zum Anbringen einer Messanordnung nach Fig.1 in einem Längsschnitt entsprechend der Linie III - III in Fig.4,
- Fig.4: eine Einzelheit der Vorrichtung in einem Querschnitt entsprechend der Linie IV - IV in Fig.3, und
- Fig.5: eine Einzelheit der Vorrichtung nach Fig.3 in einer abgewandelten Ausführungsform.

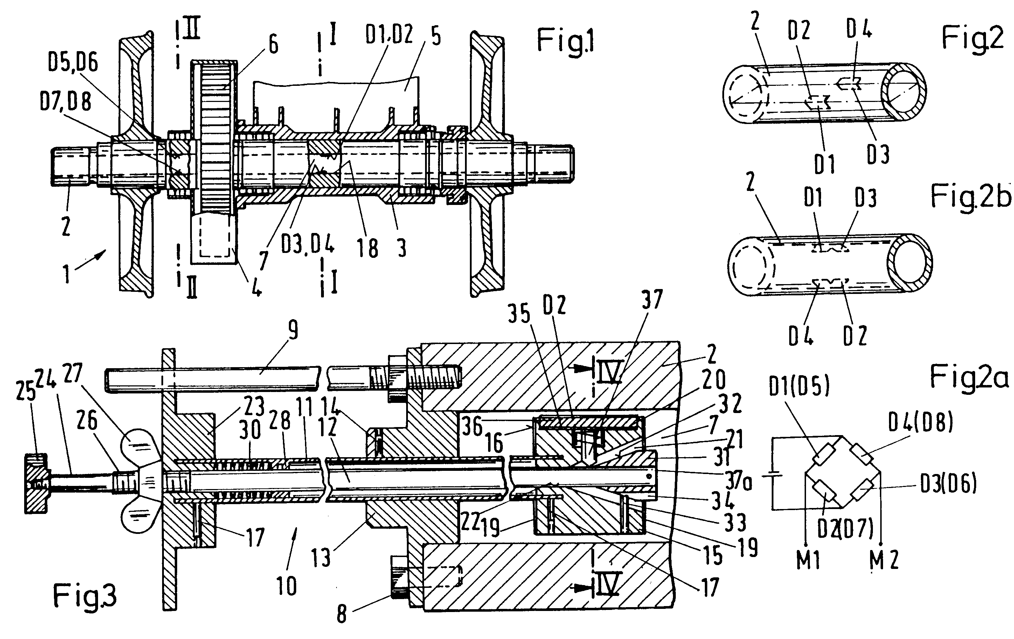

Der in Fig.1 dargestellte Radsatz 1 enthält eine hohle Radsatzwelle 2, auf der eine Hohlwelle 3 und ein damit verbundenes Getriebegehäuse 4 gelagert sind. Auf der Hohlwelle 3 ist ein Antriebsmotor 5 abgestützt, der an einem nicht dargestellten Fahrzeugteil, z.B. einem Drehgestellrahmen, aufgehängt und über ein Getriebe 6 mit der Radsatzwelle 2 gekoppelt ist. In der Bohrung 7 der Radsatzwelle 2 sind in zwei Messquerschnitten I und II je vier Messfühler in Form von Dehnungsmessstreifen D1, D2, D3, D4 bzw. D5, D6, D7, D8 angebracht. Wie insbesondere aus der Fig.2 hervorgeht, sind je zwei der Messfühler jeder Gruppe gegeneinander um 180° versetzt an der Wandung der Bohrung 7 angeklebt. Die Messfühler D1 bis D4 bzw. D5 bis D8 sind über nicht dargestellte, durch die Bohrung 7 hinausgeführte Signalleitungen zu einer in Fig.2a dargestellten Wheatstone-Messbrücke geschaltet, wobei die jeweils gegeneinander um 180° versetzt angeordneten Messfühler D1 und D4 bzw. D2 und D3 einen Zweig der Messbrücke bilden. Die zwischen den Messpunkten M1 und M2 gemessenen Spannungen ergeben ein Mass für die im betreffenden Messquerschnitt auftretenden Zug- bzw. Druckspannungen sowie für die aus dem jeweiligen Drehmoment resultierende Torsionsbeanspruchung.

Bei der in Fig.2b dargestellten Messanordnung sind die Messfühler D1 und D4 des einen Zweiges der Messbrücke in der einen Querschnittshälfte der Welle 2, und die Messfühler D2 und D3 des anderen Zweiges in der anderen Querschnittshälfte einander gegenüberliegend angeordnet. Bei dieser Messanordnung ergeben die zwischen den Messpunkten M1 und M2 gemessenen Spannungen ein Mass für die im betreffenden Querschnitt auftretenden Biegemomente.

Es versteht sich, dass die beschriebenen Messanordnungen auch in Laufachsen bzw. in Achsen und Wellen beliebiger Bauform angebracht werden können.

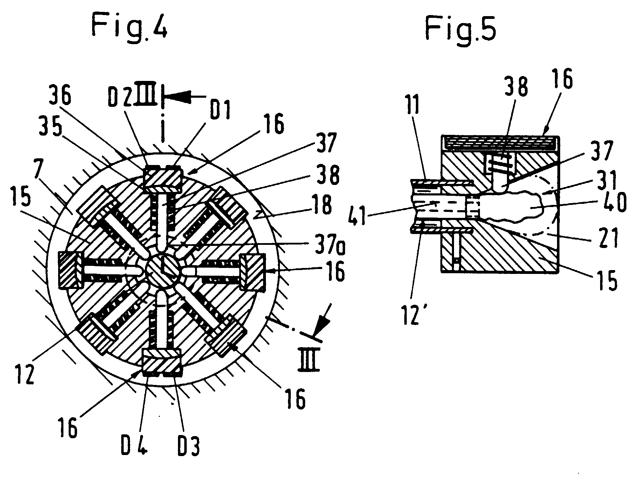

Die in den Fig.3 und 4 dargestellte Vorrichtung zum Anbringen der Messanordnung enthält eine in die Radsatzwelle 2 einführbare teleskopartige Führungseinrichtung 10 mit einem rohrförmigen Träger 11 und einem diesen durchsetzenden stangenförmigen Verstellteil 12. Der Träger 11 ist in einem an der Radsatzwelle 2 stirnseitig, mittels Schrauben 8 anbringbaren Führungsteil 13 in axialer Richtung und in Umfangsrichtung verstellbar und mittels einer Stellschraube 14 feststellbar geführt. Das in die Bohrung 7 einzuführende Ende des Trägers 11 ist mit einem aufsteckbaren zylindrischen Kopfteil 15 versehen, der als Halterung für mindestens einen, bezüglich der Längsachse des Trägers 11 radial beweglichen Anpressteil 16 dient. Der Kopfteil 15, der auf dem Träger 11 in Umfangsrichtung verstellbar und darstellungsgemäss mittels einer Stellschraube 17 feststellbar angebracht sein kann, ist in der Bohrung 7 im Abstand von deren Wandung 18 gehalten.

Bei der dargestellten Ausführung ist der Kopfteil 15 als Halterung für acht in Umfangsrichtung gegeneinander versetzt angeordnete Anpressteile 16 ausgebildet, welche in am Umfang des Kopfteils 15 vorgesehenen, parallel zur Längsachse des Trägers 11 verlaufenden nutenartigen Vertiefungen 20 versenkt angeordnet sind. Die Vertiefungen 20 können beidenends durch am Kopfteil 15 angebrachte Schutzbleche 19 abgedeckt sein. Es sind auch Ausführungen mit einer anderen Anzahl, z.B. zwei bis zwölf, entsprechend angeordneten Anpressteilen möglich. An der dem Träger 11 abgewandten Seite des Kopfteils 15 ist eine gegen das Ende des Trägers 11 hin konisch sich verjüngende Bohrung 21 ausgebildet, die in eine Führungsbohrung 22 für den Verstellteil 12 übergeht. Das aus der Bohrung 7 nach aussen vorstehende Ende des Trägers 11 ist mit einem stirnseitigen Führungsflansch 23 verbunden, in welchem der Verstellteil 12 in axialer Richtung und in Umfangsrichtung verstellbar und feststellbar gehalten ist. Zur Stabilisierung der Führungseinrichtung 10 kann darstellungsgemäss mindestens eine in die Welle 2 einschraubbare Führungsstange 9 vorgesehen sein, die sich über die Auszugslänge des Trägers 11 und durch eine Bohrung des Führungsflansches 23 hindurch erstreckt.

Der Verstellteil 12 ist im Kopfteil 15 und im Führungsflansch 23 drehbar und axial verschiebbar gelagert und ist auf einer über den Führungsflansch 23 vorstehenden Endpartie 24 mit einem Griffteil, darstellungsgemäss einer Rändelmutter 25, und einer auf einem Gewindeabschnitt 26 angeordneten Verstellmutter 27 versehen. Der Verstellteil 12 ist relativ zum Träger 11 über einen Stützring 28 und eine Federanordnung 30, darstellungsgemäss eine Druckfeder, gegen den Führungsflansch 23 verspannbar und über die Verstellmutter 27 in Längsrichtung einstellbar gehalten. Das im Kopfteil 15 gelagerte, in die konische Bohrung 21 ragende Ende des Verstellteils 12 ist mit einem kegelstumpfförmigen Kupplungsteil 31 versehen, welcher eine der Bohrung 21 entsprechende, konische Mantelfläche 32 aufweist. Gemäss Fig.3 ist der Kupplungsteil 31 unter der Wirkung der Druckfeder 30 in einem durch die Stellung der Verstellmutter 27 bestimmten axialen Abstand vom Kopfteil 15 gehalten und kann, gegen die Wirkung der Druckfeder 30, gegen die Wandung der Bohrung 21 geführt werden. Als Verdrehsicherung für den Kupplungsteil 31 kann ein im Kopfteil 15 anbringbarer Führungsstift 33 vorgesehen sein, der in eine im Kupplungsteil 31 angeordnete Längsnut 34 eingreift.

Die in den Vertiefungen 20 des Kopfteils 15 angeordneten, darstellungsgemäss leistenförmigen Anpressteile 16 sind je zur Aufnahme mindestens eines der an der Wandung 18 der Bohrung 7 anzubringenden Messfühler D1 bis D4 bzw. D5 bis D8 bestimmt und können je mit einem metallischen Tragteil 35 und einer aus einem gummiartigen Material bestehenden Stützpartie 36 ausgeführt sein, auf welcher der betreffende Messfühler lösbar befestigt werden kann. Bei der dargestellten Ausführung sind auf den in den Fig.3 und 4 vertikal angeordneten Anpressteilen 16 je zwei paarweise angeordnete, z.B. für den Messquerschnitt I bestimmte Messfühler D1 und D2 bzw. D3 und D4 angebracht, von denen jeder eine der Wandung 18 der Bohrung zugewandte Klebefläche aufweist. Wie aus den Fig.3 und 4 weiter hervorgeht, können die Anpressteile 16 je mit einem im Kopfteil 15 angeordneten Führungselement 37, darstellungsgemäss einem in einer axialen Bohrung verschiebbar angeordneten Führungszapfen, verbunden sein, der mit einem inneren Ende 37a in die konische Bohrung 21 ragt. Die inneren Enden 37a sind zum Zusammenführen mit dem Kupplungsteil 31 bestimmt, dessen Mantelfläche 32 als Abhebe- bzw. Auflaufpartie zum Verstellen der Führungselemente 37 ausgebildet ist. Durch eine Verschiebebewegung des Verstellteils 12 in Fig.3 nach links wird der Kupplungsteil 31 gegen die Wandung der Bohrung 21 geführt, wobei die Führungselemente 37 entsprechend radial nach aussen verschoben und die je mit den Messfühlern (D1 und D2 bzw. D3 und D4 bestückten Anpressteile 16 über den Kopfteil 15 radial nach aussen vorgestreckt und gegen die Wandung 18 der Bohrung 7 angepresst werden.

Entsprechend können die Messfühler D1 bis D4 jeweils in einer genau definierbaren Winkelstellung in einem beliebigen Längenabschnitt, darstellungsgemäss im Messquerschnitt I, der Radsatzwelle 2 positioniert und an der Wandung 18 angeklebt werden. Nach dem Herstellen der Klebeverbindung kann die Verstellmutter 27 gelöst und der Verstellteil 12 mit dem Kupplungsteil 31 in die dargestellte Lösestellung zurückgeführt werden, welche eine Rückführung der Anpressteile 16 aus ihren Anpressstellungen je in die dargestellte, von der Wandung 18 entfernte Ruhestellung gestattet. In den Bohrungen für die Führungselemente 37 können Rückführelemente, darstellungsgemäss Zugfedern 38, angeordnet sein, durch welche die Anpressteile 16 je nach innen, gegen den Verstellteil 12 verspannbar gehalten sind. In entsprechender Weise können die oder einzelne der Anpressteile 16 mit in beliebigen Längenabschnitten der Welle 2, z.B. im Messquerschnitt II, anzubringenden Messfühlern D5 bis D8 sowie mit weiteren, in einer beliebigen Anzahl, z.B. sechs bis acht, Messquerschnitten anzubringenden Messfühlern bestückt werden. Die Messfühler können in einer relativ grossen Anzahl, darstellungsgemäss in vier Vollbrücken mit je vier Dehnungsmessstreifen, pro Messebene angeordnet sein.

Es sind zahlreiche Ausführungsformen der Erfindung möglich. Gemäss Fig.5 kann als Kupplungsteil 31 ein in der Ausnehmung 21 des Kopfteils 15 angeordneter, an eine Druckmittelquelle anschliessbarer, expandierbarer Verdrängungskörper, darstellungsgemäss ein Luftbalg 40, vorgesehen sein, der über eine den Träger 11 durchsetzende Verbindungsleitung 41 an eine ausserhalb des Radsatzes 2 angeordnete, nicht dargestellte Druckmittelquelle angeschlossen werden kann. Entsprechend kann der Luftbalg 40 jeweils durch Druckluftzufuhr aufgeblasen und gegen die Führungselemente 37 gedrängt werden, wobei die Anpressteile 16 in beschriebener Weise abgehoben, an die Wandung 18 angepresst und anschliessend, durch Ablassen der Druckluft, je in die dargestellte Ruhestellung zurückgeführt werden. Als Verbindungsleitung 40 kann ein bei dieser Ausführung im Kopfteil 15 feststehend angeordneter, rohrförmiger Verstellteil 12' vorgesehen sein, an dem der Luftbalg 40 angebracht, z.B. anvulkanisiert, werden kann.

Zusammenfassend lässt sich die Erfindung wie folgt beschreiben:

Die Messanordnung enthält mehrere, je an der Welle des Radsatzes an verschiedenen Messquerschnitten anbringbare Messfühler, insbesondere Dehnungsmessstreifen, zum Erfassen der im Fahrbetrieb auftretenden Kräfte. Die Messfühler sind innerhalb einer die Welle zumindest teilweise durchsetzenden axialen Bohrung an deren Wandung befestigt. Diese Anordnung gestattet die Anbringung der Messfühler in einem serienmässigen Radsatz ohne Beeinträchtigung der Festigkeit der Radsatzwelle. Die Vorrichtung zum Anbringen der Messanordnung enthält einen in die Bohrung einführbaren Träger mit einer Halterung für mehrere radial verstellbare, je mit mindestens einem Messfühler bestückbare Anpressteile und einen den Träger durchsetzenden Verstellteil mit einem Kupplungsteil, über den die Anpressteile je zwischen einer ein Anpressen des Messfühlers an die Wandung der Bohrung zulassenden Anpressstellung und einer im Abstand von der Wandung einnehmbaren Ruhestellung verstellbar sind. Die Messfühler sind jeweils in einer genau definierbaren Winkelstellung in einem beliebigen Längenabschnitt der Welle positionierbar.

## Patentansprüche

1. Messanordnung für einen Radsatz (1) eines Schienenfahrzeuges, mit an der Welle (2) des Radsatzes (1) an verschiedenen Messquerschnitten (I, II) anbringbaren Messfühlern (D1 - D4 bzw. D5 - D8), insbesondere Dehnungsmessstreifen, zum Erfassen der im Fahrbetrieb auftretenden Kräfte,
dadurch gekennzeichnet, dass die Messfühler (D1 - D4 bzw. D5 - D8) innerhalb einer die Welle (2) zumindest teilweise durchsetzenden axialen Bohrung (7) an deren Wandung (18) befestigt sind.

2. Vorrichtung zum Anbringen der Messanordnung nach Anspruch 1 an einem Radsatz (1), gekennzeichnet durch einen zum Einführen in die axiale Bohrung (7) der Welle (2) bestimmten rohrförmigen Träger (11) mit einer im Abstand von der Wandung (18) der Bohrung (7) positionierbaren Halterung (15), mindestens einen an der Halterung (15) bezüglich der Längsachse des Trägers (11) radial nach aussen vorstreckbar und nach innen zurückführbar angebrachten, mit mindestens einem der Messfühler (D1 - D4 bzw. D5 - D8) lösbar bestückbaren Anpressteil (16), und einen den rohrförmigen Träger (11) durchsetzenden Verstellteil (12, 12'), der mit einem gegen den Anpressteil (16) verspannbaren Kupplungsteil (31) versehen ist, welcher zwischen einer ein Anpressen des Anpressteils (16) an die Wandung (7) zulassenden Koppelstellung und einer ein Zurückführen des Anpressteils (16) zulassenden Lösestellung verstellbar ist.

3. Vorrichtung nach Anspruch 2, dadurch gekennzeichnet, dass der Anpressteil (16) mit einem in einer radialen Bohrung der Halterung (15) verschiebbar gelagerten Führungselement (37) verbunden ist, welches mit einem inneren Ende (37a) in eine axiale Ausnehmung der Halterung (15) ragt, und dass der Kupplungsteil (31) eine zum Zusammenführen mit dem inneren Ende (37a) des Führungselementes (37) bestimmte Anhebepartie enthält, über welche das Führungselement (37) zwischen einer eingezogenen Stellung, die einer Ruhestellung des Anpressteils (16) entspricht, und einer Abhebestellung verstellbar ist, in der der Anpressteil (16) gegen die Wandung (18) der Bohrung (7) der Welle (2) anpressbar ist.

4. Vorrichtung nach Anspruch 2 oder 3, bei welcher der Anpressteil (16) in einer parallel zur Achse des Trägers (11) verlaufenden nutenartigen Vertiefung (20) der Halterung (15) angeordnet ist.

5. Vorrichtung nach einem der Ansprüche 2 bis 4, bei welcher der Anpressteil (16) eine aus einem gummiartigen Material bestehende Stützpartie (36) für den an der Wandung (18) der Bohrung (7) anbringbaren Messfühler (D1 - D4 bzw. D5 - D8) enthält.

6. Vorrichtung nach einem der Ansprüche 2 bis 5, bei welcher die Halterung (15) eine den Kupplungsteil (34) aufnehmende, in Richtung der Längsachse des Trägers (11) konisch sich verjüngende Bohrung (21) aufweist und der Kupplungsteil (34) eine entsprechend konisch verlaufende Mantelfläche (32) aufweist, welche als Anhebepartie für das innere Ende (37a) des Führungselementes (37) ausgebildet ist.

7. Vorrichtung nach einem der Ansprüche 2 bis 6, bei welcher der rohrförmige Träger (11) in einem an der Welle (2) stirnseitig anbringbaren Führungsteil (13) in axialer Richtung und in Umfangsrichtung verstellbar und feststellbar gehalten ist.

8. Vorrichtung nach einem der Ansprüche 2 bis 7, bei welcher der rohrförmige Träger (11) mit einem stirnseitigen Führungsflansch (23) versehen ist, in welchem der Verstellteil (12) in axialer Richtung verstellbar und feststellbar gehalten ist.

9. Radsatz eines Schienenfahrzeuges mit einer Messanordnung nach Anspruch 1.
